# EUROPEAN PATENT APPLICATION

(11) **EP 1 452 149 A1**
(43) Date of publication of application: **01.09.2004**
(21) Application number: 03078950.7
(22) Date of filing: 16.12.2003
(51) Int. Cl.: A61C 8/00

(54) **Assembly of a dental implant and an abutment and method for connecting the abutment to said implant**

(30) Priority: 26.02.2003 NL 1022783
(71) Applicant: Van der Laaken, Frans, 1052 LS Amsterdam (NL)
(72) Inventor: Van der Laaken, Frans, 1052 LS Amsterdam (NL)
(74) Representative: Lips, Hendrik Jan George, Ir.

(57) **Abstract**

Assembly of a dental implant (1) and an abutment (6), said implant being provided with external means (3) for fixing the implant in the jaw bone and over a part of its length being provided with an inner hole (4) in which a correspondingly shaped pin (5) of the abutment (6) can be received, such that the pin (5) cannot rotate in the implant (1). The abutment (6) is fixed in the implant (1) by means of dentistry cement, an adapter ring (12) being incorporated between a stop surface (8) of the abutment (1) and the implant (1). To drain off superfluous cement during cementation the outer surface of the pin (5) of the abutment (6) is provided with at least one groove (7), substantially extending over the length of the pin and running till the stop surface (8).

## Description

The invention relates to an assembly of a dental implant and an abutment, said implant being provided with external means for fixing said implant into a jaw bone and with an internal hole for receiving a pin of the abutment, as described in the preamble of claim 1.

Such an assembly is known from US 4 468 200. In case of this known assembly the hole in the implant for receiving the pin of the abutment is having a square cross-section. One corner of the pin of the abutment is left off to provide a channel for administrating adhesives. Further the lower surface of the abutment and the upper surface of the implant are shaped such, that the abutment fits snugly over the implant.

In view of the relatively small dimensions of the parts it might happen that the abutment is distorted, is worn or has to be replaced for another reason. In case of said known assembly it will be hardly possible to remove the abutment out off the implant. This might cause complications.

US 5 839 898 describes an abutment which is primary shaped of two separate parts. From one surface of the engaging surfaces material can be removed so that the parts will make an angle with each other after having been connected to each other. By this it is obtained that the place of the retainer for a dental implant can be adjusted. By means of said primary shaped abutment the final abutment can be fabricated.

US 5 695 334 describes a bendable post which is bent to a desired angle and cemented in this position. Then a ceramic mold is formed around said cemented post, which then is removed out of it. A permanent post is cast in the mold from a suitable material.

US 6 315 563 describes an implant and abutment which are connected to each other by a system of screw thread and a lock element. This gives a very complicated structure.

Further an O-ring is provided to seal the inside of the implant against external influences. Said O-ring is totally enclosed by parts of the implant and of the abutment.

In view of the relatively small dimensions of the parts the fabrication of the parts will be rather difficult and so costly. Futher it will hardly be possible to replace the abutment.

The object of the invention is to provide an assembly and a method for connecting the parts of it such that a relatively strong structure and a strong connection between the parts is obtained while nevertheless the abutment can be removed out off the implant in a rather simple way.

Still a further object of the invention is to provide an assembly by which it is possible to limit the number of different parts which should have to be in stock.

Preferably use is made of implants with different diameters, adapted to the jaw bone in which it has to be placed as obviously the implant has to be as strong as possible. To obtain a smooth transition of the implant to the abutment, for each diameter of the implant a special abutment has to be used. This means that a considerably amount of abutments has to be in stock, which has disadvantages in view of the relatively high costs of said parts.

According to the invention this provides an assembly consisting of an implant, an abutment and an adapter ring which can be received between the stop surface of the abutment and the upper surface of the implant, the outer diameter of the surface of the adapter ring, engaging the abutment, being substantially equal to the outer diameter of the stop surface of the abutment and the outer diameter of the surface of the adapter ring, engaging the implant, being substantially equal to the outer diameter of the implant.

By applying an adapter ring a smooth transition between the upper surface of the implant and the stop surface of the abutment is obtained. Only adapter rings have to be in stock for the different, standardized diameters of implants, while the same abutments can be used for the different diameters. Obviously the bore in the adapter ring will be adapted to the cross-section of the pin of the abutment. The thickness of the adapter ring is standerized but can be smaller or thicker corresponding with the thickness of the gums above the implant.

Further the presence of the adapter ring brings the possibility with it to remove the abutment out of the implant in a simple way, if this should be necessary for one reason or another after definite cementation.

The adapter ring not only takes care for a smooth transition of the implant to the upper part of the abutment, by removing said ring, however, gripping surfaces can be obtained so that the abutment can be removed from the implant, also when a more or less definite cementation has already taken place.

The invention further provides a method according to which the adapter ring and the abutment are connected to the implant by means of dentistry cement.

It has appeared that by using dentistry cement a sufficient strong connection between the implant and the abutment can be obtained. So no weakening of the parts by screws or other fixing means occurs, so that the possibility of distortion of said parts is considerably decreased.

Also it appears to be possible to remove an abutment out off the implant also after cementation. This is caused by the structure of the dentistry cement. When an adhesive should be used the removing of the abutment out off the implant gives much more problems.

To obtain a good connection between the abutment and the implant the cross-section of the pin of the abutment, which is received in the hole of the implant, will be slightly smaller than the, in shape corresponding, cross-section of the hole in the implant. The space remaining between the pin and the implant will be filled with cement.

During cementation always somewhat more dentistry cement will be brought into the hole of the implant than is strictly necessary to obtain a good connection between the various parts. So it must be possible that during cementation cement is drained from the hole.

In connection with this, according to a further elaboration of the invention, the outer surface of the pin of the abutment is provided with at least one groove, substantially extending over the length of the pin and running till the stop surface of the abutment.

It is not necessary that the groove extends parallel to the longitudinal axis of the pin but it can also have a spiral shape. Making a straight groove, however, is the most simple. By this also the abutment will be less weakened. Obviously by applying said groove in the pin of the abutment the cross-section of it will no longer correspond exactly with the cross-section of the hole in the implant.

Obviously it is also possible to apply a groove in the implant, but machining of the inner surface of the hole in the implant of course is much more difficult. By this also the implant should be weakened and replacing this part is much more difficult than replacing the abutment.

As already said a part of the dentistry cement, being brought into the hole during cementation, will be pressed out of it when the pin of the abutment is brought into the hole and will be received in the groove in the pin. From this groove cement will be pressed between the surfaces of the adapter ring and the implant either the abutment and in the hole of the adapter ring. By this it is obtained that no or substantially no free space between the various parts will remain and that a stable connection between all parts of the assembly will be obtained.

The invention is further elucidated by means of an embodiment, shown in the drawing, in which:
Fig. 1 shows a side view, at a larger scale, of an implant, an adapter ring and an abutment before the parts are assembled, said implant being partially shown in longitudinal section;
Fig. 2 shows a cross-section at a further enlarged scale of the pin of the abutment according to the line II - II of fig. 1; and
Fig. 3 shows a perspective side view of the upper part of the implant with a knob for temporary closing the hole in the implant.

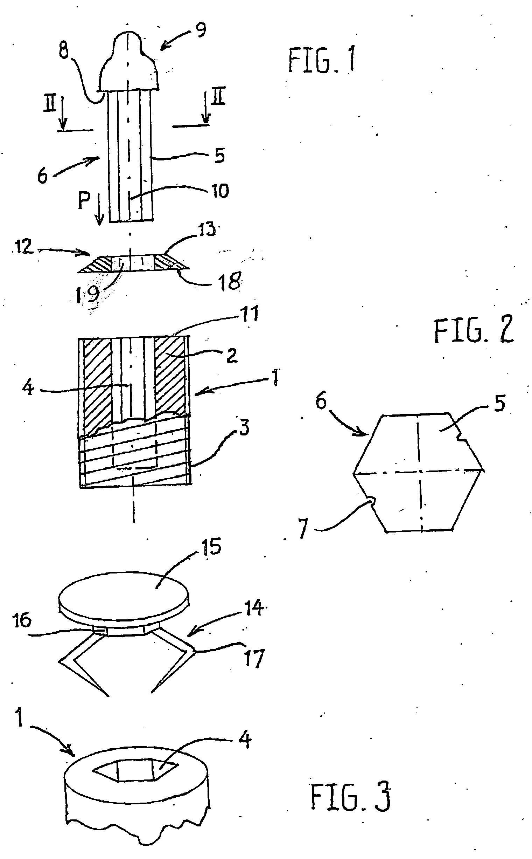

Fig. 1 shows an implant 1, comprising a substantially cylindrical part 2, which on its outside is provided with screw thread 3 and inwardly is provided with a hole 4. The outer wall of the part 2 may taper somewhat. In cross-section the hole 4 is in the shape of a hexagon although other shapes are possible. The cross-section can also be substantially circular with small extensions either impressions.

The hexagon shape is prefered. Then the abutment can be positioned in the implant in six different positions while a good grip is obtained for the tool by which the implant is fixed into the jaw. As a tool it can be thought of a wrench for hexagon-socket head screws.

In the hole 4 the solid pin 5 of an abutment 6 kan be slid, as indicated by the arrow P in fig. 1. As shown in fig. 2 the pin 5 as well has a hexagon cross-section such that it can be fittingly received in the hole 4. As already mentioned aabove the cross-section of the pin 5 and the hole 4 will be such that the pin 5 cannot rotate in the hole 4.

To fasten the pin 5 of the abutment 6 in the hole 4 use is made of dentistry cement. To make it possible to remove superfluous cement during fixing, the pin is provided with longitudinal grooves 7, see fig. 2, debouching at the stop surface 8 of the upper part 9 of the abutment 6.

The upper part 9 cam be executed in very different ways depending on the object for which the implant 1 will be used. The upper part 9 needs not to be rotation symmetrically in respect of the centre line 10 of the pin 5, but e.g. can have an extension to one side.

In that case two abutments 6 might be fabricated the extensions of which are making angles of 30° with each other. By using the one abutment either the other during placing an abutment in the implant it can be obtained that the extension might be positoned in not only six but in twelve different positions. So the number of possible positions can be doubled.

If three different abutments 6 are fabricated having extensions positioned under angles differing only 15° from each other the number of possible positions can be doubled once again.

To obtain a smooth transition from the upper part 9 of the abutment 6 to the upper surface 11 of the implant 1, between this surface 11 and the stop surface 8 of the abutment 6 an adapter ring 12 is provided.

The outer diameter of the stop surface 8 of the abutment 6 will substantially equal the outer diameter of the upper surface 13 of the adapter ring 12 and the outer diameter of the surface 18 of the adapter ring 12, engaging the upper surface 11 of the implant 1, will substantially equal the outer diameter of the implant. The outer surface of the adapter ring 12 might be curved.

Although in fig. 1 the outer diameter of the implant 1 is larger than that of the stop surface 8 of the abutment 6 obviously the reversed can be the case.

As explained already above a certain amount of dentistry cement will be brought into the hole 4 while next the pin 5 of the abutment 6 will be slid through the adapter ring 12 and into the hole 4, as indicated by the arrow P in fig. 1.

During this the superfluous dentistry cement will be pressed outwardly via the grooves 7 and will be received between the engaging surfaces of the implant 1 and the adapter ring 12 and via the inner hole 19 in the adapter ring 12 between the upper surface 13 of the adapter ring 12 and the stop surface 8 of the abutment 6. The remainder of the cement will be pressed outwardly and can be removed.

If afterwards the abutment 6 should have to be removed out off the implant 1, primary the adapter ring 12 will be removed. Then use can be made of a clamping member with two or more opposite lying clamping edges being movable in respect of each other. Said clamping edges e.g. can be pressed towards each other in the space formed by the removing of the adapter ring 12 between the implant 1 and the abutment 6. Then the clamping edges can be moved away from each other in the direction of the center line 10, so that the parts 1 and 6 will be drawn away from each other. One night think of the working of a corkscrew.

Removing the adapter ring 12 can be done by drilling away a part of it, after which the remaining part of the relatively thin ring can be removed.

So the adapter ring 12 has a double function. Primary a smooth transition is obtained of the implant 1 to the upper part 9 of the abutment 6 and secondly a gripping point can be obtained after removing the adapter ring 12 so that the abutment 6 can be removed out off the implant 1 also when a definite cementation has taken place.

While in fig. 1 a certain shape of an upper part 9 of an abutment 6 is shown, as already indicated before, also other shapes of this can be applied. So said abutment can internally be provided with a bore with screw thread for fixing a given dentistry part on it.

By the use of dentistry cement for fixing the abutment 6 in the implant 1 it is obtained, that the costs of implant 1 and abutment 6 are considerably decreased while nevertheless an extremely stiff connection between said parts is obtained, being strong enough to withstand the forces which are executed on the parts during chewing.

Fig. 3 shows the possibility to obtain a temporary closing of the hole 4 in the implant 1. This might be desirable during the period that the implant has to grow into the jaw bone. For this use can be made of a knob 14 from a somewhat resilient material, which can be pressed into the hole 4 in the implant 1 directly after the implant is mounted in the jaw bone and so is not yet suited for bringing the abutment 6 into it.

The knob 14 comprises an upper plate 15 engaging the upper surface 11 of the implant 1, a hexagonal part 16 being clampingly engaged in the hole 4 in the implant 1 and some resilient legs 17 to obtain additional clamping force.

Obviously only one possible embodiment of an assembly of implant, abutment and adapter ring according to the invention is shown in the drawing and is described above. It will not limit the invention, many modifications being possible without leaving the inventive scope as this is indicated in the claims.

## Claims

1. Asssembly of a dental implant (1) and an abutment (6), said implant being provided with external means for fixing said implant into a jaw bone and with an internal hole (4) in which a pin (5) of the abutment (6) can be received, said abutment being provided with a stop surface (8), **characterized in that** the shape of the cross-section of the pin (5) of said abutment (6) corresponds with the shape of the cross-section of the hole (4) in the implant (1) in such a way that the pin (5) cannot rotate in the implant, an adapter ring (12) being present which can be received between the stop surface (8) of the abutment (6) and the upper surface (11) of the implant (1), the outer diameter of the surface (13) of the adapter ring (12), engaging the abutment (6), being substantially equal to the outer diameter of the stop surface (8) of the abutment (6) and the outer diameter of the surface (19) of the adapter ring (12), engaging the implant (1), being substantially equal to the outer diameter of the implant.

2. Assembly according to claim 1, **characterized in that** the cross-section of the pin (5) of the abutment (6), which is received in the hole (4) of the implant (1), is slightly smaller than the cross-section of the hole (4) in the implant.

3. Assembly according to claim 1 or 2, **characterized in that** the outer surface of the pin (5) of the abutment (6) is provided with at least one groove (7), substantially extending over the length of the pin and running till the stop surface (8) of the abutment (6).

4. Assembly according to one of the preceding claims, **characterized in that** the shape of the cross-section of the hole (19) in the adapter ring (12) corresponds with that of the hole (4) in the implant.

5. Method for connecting the parts of the assembly according to one of the preceding claims, **characterized in that** the abutment (6) and the adapter ring (12) are connected to the implant (1) by means of dentistry cement.
